# EUROPÄISCHE PATENTSCHRIFT

(11) **EP 2 099 640 B1**
(45) Veröffentlichungstag und Bekanntmachung des Hinweises auf die Patenterteilung: **04.07.2018**
(21) Anmeldenummer: 07817652.6
(22) Anmeldetag: 12.10.2007
(51) Int. Cl.: B60L 13/03, B60L 13/08

(54) **MAGNETSCHWEBEFAHRZEUG MIT WENIGSTENS EINEM MAGNETSYSTEM**
MAGNETIC LEVITATION VEHICLE COMPRISING AT LEAST ONE MAGNETIC SYSTEM
VÉHICULE À SUSTENTATION MAGNÉTIQUE COMPRENANT AU MOINS UN SYSTÈME MAGNÉTIQUE

(30) Priorität: 27.11.2006 DE 102006056335
(43) Veröffentlichungstag der Anmeldung: 16.09.2009
(73) Patentinhaber: ThyssenKrupp Transrapid GmbH, 34127 Kassel (DE)
(72) Erfinder: LÖSER, Friedrich, 85521 Riemerling (DE); ZHENG, Qinghua, 80331 München (DE)
(74) Vertreter: Lorenz, Bernd Ingo Thaddeus
(86) Internationale Anmeldenummer: PCT/DE2007/001812
(87) Internationale Veröffentlichungsnummer: WO 2008/064622

(56) Entgegenhaltungen:
- DE-A1- 2 343 884
- DE-A1-102004 056 438
- US-A- 4 979 445

## Beschreibung

Die Erfindung betrifft ein Magnetschwebefahrzeug der im Oberbegriff des Anspruchs 1 angegebenen Gattung.

Magnetschwebebahnen mit Fahrzeugen dieser Art werden z. B. durch Langstator-Linearmotoren angetrieben und weisen zum Antrieb der Fahrzeuge bestimmte Dreiphasen-Wechselstrom-Wicklungen auf, die längs des Fahrwegs in einem Langstator verlegt sind. Das Erregerfeld der Linearmotoren wird dabei von gleichzeitig als Erregermagneten wirkenden, im Fahrzeug angeordneten Tragmagneten geliefert, die eine erste Magnetanordnung bilden (z. B. DE 39 17 058 C2). Die Linearmotoren können außer für den Antrieb auch zum Bremsen der Fahrzeuge verwendet werden.

Eine gattungsgemäße magnetische Antriebsvorrichtung ist aus der DE 23 43 884 A1 bekannt, wobei es sich bei dem Fahrzeug vorzugsweise um ein Modell einer Magnet-Schwebebahn oder um einfaches Transportfahrzeug handelt. Der Fahrweg ist anders als bei der zuvor beschriebenen Magnet-Schwebebahn mit einem fest angeordneten Magnetsystem ausgerüstet, welches in einem Abstand voneinander angeordnete Magnetpole aufweist. Durch zwei an dem Fahrzeug angeordnete Magnetpole, die mit einer gemeinsamen Wicklung beaufschlagt sind, kann durch Ein- und Ausschalten der Ströme eine Bewegung des Fahrzeugs erreicht werden. Durch die gemeinsame Wicklung können die beiden Magnetpole nicht unabhängig voneinander angesteuert werden.

Die US 4 979 445 offenbart ein Magnet-Schwebefahrzeug mit einer Platte aus supraleitendem Material, welches zur Ermöglichung des Schwebens, des Antriebes sowie des Bremsens mit einem von Wicklungen in dem Fahrweg induziertem Feld zusammenwirkt.

Daneben weisen die Magnetschwebefahrzeuge der eingangs bezeichneten Gattung vorzugsweise auf beiden Seiten je eine zweite Magnetanordnung auf, die der Funktion "Führen" dient und eine Mehrzahl von in Fahrtrichtung hintereinander angeordneten Magnetpolen und diesen zugeordneten Wicklungen aufweist (z. B. DE 10 2004 056 438 A1). Diese werden derart mit Strom betrieben, dass alle jeweils in einer zur Fahrtrichtung parallelen Reihe bzw. Ebene liegenden Magnetpole dieselbe Polarität aufweisen. Außerdem werden diese Magnetanordnungen mit Hilfe von Regelkreisen und zugeordneten Spaltsensoren so gesteuert, dass nachfolgend als Führspalte bezeichnete Spalte zwischen den Magnetpolen und beidseitig am Fahrweg angebrachten, ferromagnetischen Seitenführschienen stets auf gleich großen Werten gehalten werden.

Da z. B. beim Ausfall einzelner oder aller Trag- und Erregermagnete oder des Antriebssystems keine Bremsmöglichkeit mehr besteht, sind für hohe Geschwindigkeiten bestimmte Magnetschwebefahrzeuge zusätzlich mit einer sog. "sicheren" Bremse ausgerüstet, die vorzugsweise aus einer Wirbelstrombremse besteht (DE 10 2004 013 994 A1). Eine derartige Wirbelstrombremse wird aus einer dritten Magnetanordnung gebildet, die zwischen den Magnetanordnungen für die Funktion "Führen" angeordnet wird. Diese dritte Magnetanordnung wirkt mit einer elektrisch leitenden Reaktionsschiene, vorzugsweise mit der Seitenführschiene zusammen und weist eine Mehrzahl von in Fahrtrichtung
hintereinander angeordneten Magnetpolen auf, die im Gegensatz zu denen der Führmagnetanordnung mit unterschiedlichen Polaritäten, vorzugsweise abwechselnd mit Nord- und Südpolen betrieben wird. Dadurch werden im Bremsfall Wirbelströme in der Reaktionsschiene erzeugt, die in Abhängigkeit von der Geschwindigkeit des Magnetschwebefahrzeugs und der Größe des Gleichstroms, der durch die Wicklungen der Bremsmagnetanordnung geleitet wird, das Magnetschwebefahrzeug mehr oder weniger stark abbremsen.

Aufgrund der beschriebenen Konstruktion üblicher Magnetschwebefahrzeuge ergeben sich insbesondere zwei Probleme. Zum einen ist der mit drei verschiedenen Magnetanordnungen verbundene konstruktive Aufwand unerwünscht groß und kostenintensiv. Zum anderen hat die abwechselnde Aneinanderreihung von Führ- und Bremsmagnetanordnungen längs der Seitenführschienen eine Vielzahl von Lastwechseln zur Folge, so dass sich ungleichförmige Krafteinleitungen ergeben, die von entsprechend verstärkten Fahrzeug- und Fahrwegkonstruktionen aufgefangen werden müssen.

Ausgehend davon besteht das technische Problem der Erfindung darin, das Magnetschwebefahrzeug der eingangs bezeichneten Gattung so auszubilden, dass eine einfachere und damit kostengünstigere Ausbildung der Magnetanordnungen möglich ist und eine gleichmäßigere Krafteinleitung bei den Funktionen "Führen" und "Bremsen" erzielt wird.

Zur Lösung dieser Aufgabe dienen die kennzeichnenden Merkmale des Anspruchs 1.

Das erfindungsgemäße Magnetschwebefahrzeug zeichnet sich dadurch aus, dass die Funktionen "Führen" und "Bremsen" mit Hilfe einer und derselben Magnetanordnung durchgeführt werden. Dadurch kann nicht nur die Zahl der bisher erforderlichen Magnetanordnungen von drei auf zwei reduziert, sondern auch eine gleichmäßigere Kraftverteilung längs des ganzen Fahrzeugs erreicht werden. Außerdem wird eine Erhöhung der Redundanz erzielt, weil für die Funktionen "Führen" und "Bremsen" mehr Magnetpole als bisher zur Verfügung stehen.

Weitere vorteilhafte Merkmale der Erfindung ergeben sich aus den Unteransprüchen.

Die Erfindung wird nachfolgend in Verbindung mit den beiliegenden Zeichnungen an einem derzeit für am besten gehaltenen Ausführungsbeispiel näher erläutert. Es zeigen:
Fig. 1 einen schematischen Teilquerschnitt durch ein übliches Magnetschwebefahrzeug;
Fig. 2 eine schematische Seitenansicht eines Teils des mit einer bekannten Führ- und Bremsmagnetanordnung ausgebildeten Magnetschwebefahrzeugs nach Fig. 1;
Fig. 3 bis 5 schematisch den Aufbau einer bekannten Führmagnetanordnung in unterschiedlichen Ansichten;
Fig. 6 bis 8 in den Fig. 3 bis 5 entsprechenden Ansichten schematisch den Aufbau einer bekannten Wirbelstrom-Bremsmagnetanordnung;
Fig. 9 und 10 schematisch eine erfindungsgemäße, kombinierte Magnetanordnung, die in Fig. 9 für die Funktion "Führen" und in Fig. 10 für die Funktion "Bremsen" eingerichtet ist; und
Fig. 11 ein Blockschaltbild zum Betreiben der Magnetanordnung nach Fig. 9 und 10.

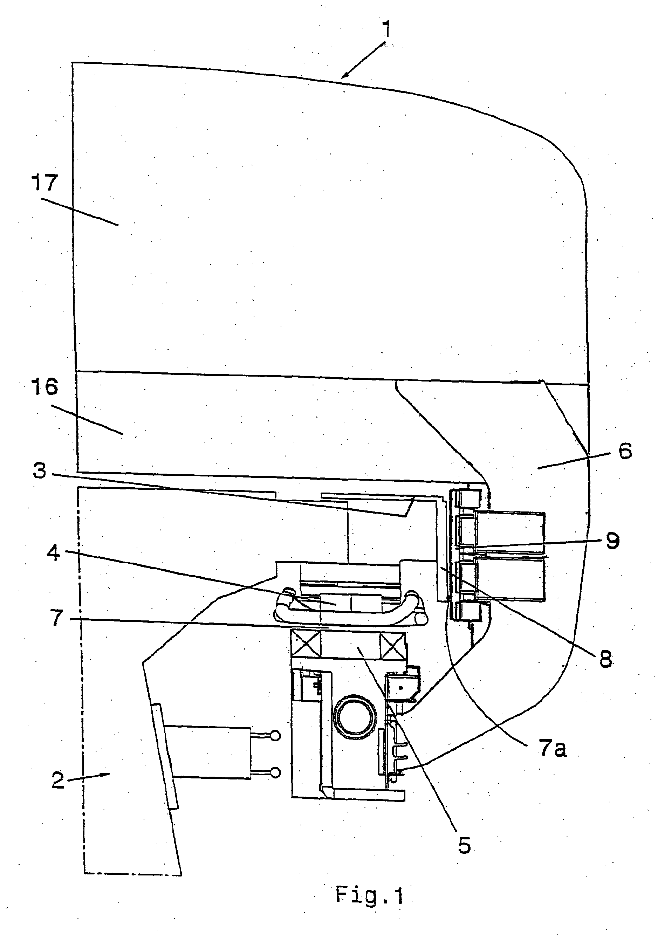

Fig. 1 zeigt schematisch einen Querschnitt durch ein Magnetschwebefahrzeug 1, das in üblicher Weise auf einem Fahrweg fahrbar montiert ist, der aus Stahl und/oder Beton hergestellte Träger 2 und auf diesen montierte Fahrwergplatten 3 enthält. Der Antrieb des Magnetschwebefahrzeugs 1 erfolgt mittels eines Langstatormotors, der unterhalb der Fahrwegplatten 3 befestigte, in deren Längsrichtung aufeinander folgende Statorpakete 4 aufweist. Die Statorpakete 4 weisen abwechselnd aufeinander folgende, nicht dargestellte Zähne und Nuten auf, in die Wicklungen eingelegt sind, die mit Drehstrom variabler Amplitude und Frequenz gespeist werden. Das eigentliche Erregerfeld des Langstatormotors wird durch wenigstens einen Tragmagneten 5 erzeugt, der mit wenigstens einem seitlichen Gestellbügel 6 am Magnetschwebefahrzeug 1 befestigt ist und den in Fig. 1 nach unten offenen Nuten der Statorpakete 4 zugewandte Magnetpole aufweist. Der Tragmagnet 5 stellt nicht nur das Erregerfeld bereit, sondern erfüllt auch die Funktion des Tragens und Schwebens, indem er beim Betrieb des Magnetschwebefahrzeugs 1 einen vorgegebenen Spalt 7 von z. B. 10 mm zwischen dem Tragmagneten 5 und den Statorpaketen 4 aufrecht erhält.

Zur Spurführung des Magnetschwebefahrzeugs 1 weisen die Fahrwegplatten 3 seitlich angebrachte Reaktions- bzw. Seitenführschienen 8 auf, denen ebenfalls an den Gestellbügeln 6 montierte Führmagnete 9 gegenüberstehen, die beim Betrieb dazu dienen, zwischen sich und der Reaktionsschiene 8 einen dem Spalt 7 entsprechenden Spalt 7a aufrecht zu erhalten. Dabei bilden der in Fig. 1 gezeigte Tragmagnet 5 und der Führmagnet 9 jeweils eine an den Gestellbügeln 6 befestigte Magnetanordnung für die Funktionen "Tragen" bzw. "Führen". Es ist jedoch klar, dass am Magnetschwebefahrzeug 1 seitlichen nebeneinander und in Fahrtrichtung hintereinander in der Regel eine Mehrzahl derartiger Magnetanordnungen angebracht sein kann. Jede Magnetanordnung ist vorzugsweise mit einem Magnetrückenkasten verbunden, mit dem sie an den Gestellbügeln 6 befestigt ist, die ihrerseits mit einem biegesteifen, Längs- und Querverbinder aufweisenden Unter- bzw. Schwebegestell 16 verbunden sind, auf dem ein mit einer Fahrgastzelle versehener Wagenkasten 17 des Magnetschwebefahrzeugs 1 (Fig. 1) abgestützt ist.

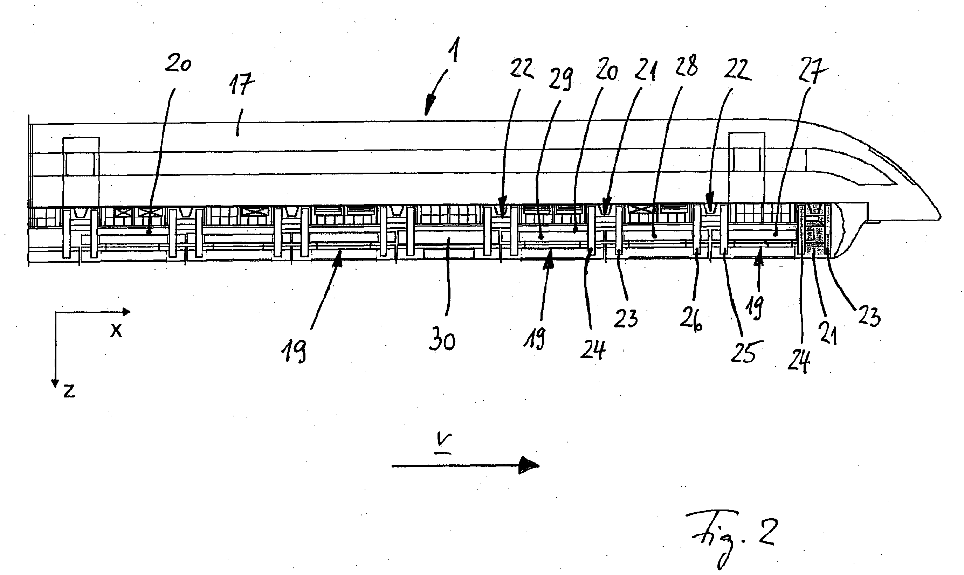

Für ein praktisches Ausführungsbeispiel des Magnetschwebefahrzeugs 1 nach Fig. 1 ergibt sich etwa die in Fig. 2 dargestellte Anordnung. Die Fahrtrichtung des Magnetschwebefahrzeugs 1 wird durch einen Pfeil v und sein Vorderende durch das Bezugszeichen 18 angegeben. Weiter sind grob schematisch einige Schwebegestellabschnitte 19 des Schwebegestells 16 (Fig. 1) gezeigt, die in Längsrichtung des Fahrzeugs 1 hintereinander angeordnet und über nicht dargestellte Luftfedern an den Wagenkasten 17 des Magnetschwebefahrzeugs 1 angekoppelt sind. Die Schwebegestellabschnitte 19 weisen in Längsrichtung beabstandete, durch Längsträger 20 verbundene Abstützelemente 21, 22 in Form von Rahmenteilen auf, die mit je einem vorderen und hinteren Abstützteil 23, 24 bzw. 25, 26 versehen sind. Dabei ist im Ausführungsbeispiel eine in Fahrtrichtung vorderste Führmagnetanordnung 27 so mit einem vordersten Schwebegestellabschnitt 19 verbunden, das ihr Vorderende am hinteren Abstützteil 24 des vorderen Abstützelementes 21 und ihr Hinterende mit dem vorderen Abstützteil 25 des hinteren Abstützelementes 22 verbunden ist, wie Fig. 2 deutlich zeigt. Eine folgende Führmagnetanordnung 28 ist normalerweise an ihrem Vorderende mit dem hinteren Abstützteil 26 des hinteren Abstützelements 22 des vordersten Schwebegestellabschnitts 19 und an ihrem Hinterende mit dem vorderen Abstützteil 23 des vorderen Abstützelements 21 des in Fahrtrichtung nachfolgenden Schwebegestellabschnitts 19 jeweils gelenkig verbunden. Eine dritte Führmagnetanordnung 29 ist analog zur ersten Führmagnetanordnung 27 mit dem zweiten Schwebegestellabschnitt 19 verbunden. Nach der dritten Führmagnetanordnung 29 ist längs eines Abschnitts, der der Länge eines Führmagneten entspricht, eine Bremsmagnetanordnung 30 eingebaut, die eine von Führmagneten freie Zone bildet und eine ebenfalls mit der Seitenführschiene 8 wechselwirkende Wirbelstrombremse ist. Die Bremsmagnetanordnung 30 ist in derselben Weise mit zwei aufeinander folgenden Schwebegestellabschnitten 19 gelenkig verbunden, wie dies für den zweiten Führmagneten 28 zutrifft. An den Bremsmagneten 30 schließen sich in Fahrtrichtung weitere, z. B. den Führanordnungen 27 bis 29 entsprechende Führmagnetenanordnungen und weitere, den Bremsmagnetanordnungen 30 entsprechende Bremsmagnetanordnungen an, bis das Ende des Fahrzeugs 1 erreicht ist. Außerdem ist klar, dass in Fig. 2 nur die eine, in Fahrtrichtung rechte Seite des Magnetschwebefahrzeugs 1 dargestellt ist und auf der in Fig. 2 nicht sichtbaren, linken Seite entsprechende Führmagnete und ggf. weitere Bremsmagnete vorhanden sein können. Alternativ kann das in Fig. 2 gezeigte Fahrzeugteil aber auch eine einzelne Sektion eines aus mehreren, aneinander gekoppelten Sektionen eines Magnetschwebefahrzeugs sein.

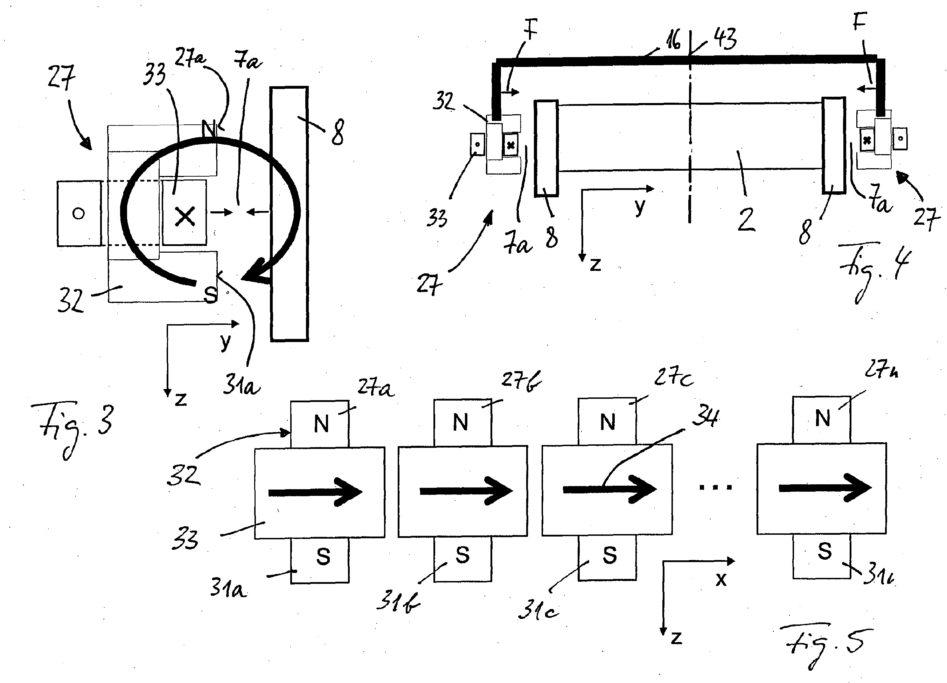

Die in den Magnetanordnungen 27 bis 30 für die Funktionen "Führen" bzw. "Bremsen" verwendeten Magnete sind in Fig. 3 bis 5 und Fig. 6 bis 8 beispielhaft und schematisch dargestellt.

Fig. 3 bis 5 zeigen zunächst den Aufbau der Führmagnetanordnung 27, wobei wie in Fig. 1 mit dem Bezugszeichen 2 der Fahrwegträger, mit dem Bezugszeichen 8 die beiden an dessen Längsseiten angebrachten Reaktionsschienen und mit dem Bezugszeichen 16 das Schwebegestell angedeutet sind. Die Koordinatensysteme in den Fig. 3 bis 5 geben an, dass wie üblich die x-Achse durch die Fahrtrichtung, die y-Achse durch die Richtung quer zur Fahrtrichtung und die z-Achse durch die Höhenrichtung definiert ist. Weiter zeigt insbesondere Fig. 4, dass jeder Reaktionsschiene 8 wenigstens je eine am Schwebegestell 16 befestigte Führmagnetanordnung 27 zugeordnet ist.

Jede Führmagnetanordnung 27 enthält im Ausführungsbeispiel gemäß Fig. 5 eine Mehrzahl von in x-Richtung nebeneinander liegenden Magnetpolen 27a, 27b, 27c ... 27n und 31a, 31b, 31c ... 31n, die in zwei parallel zur x-Richtung erstreckten und übereinander liegenden Reihen angeordnet sind, wobei je zwei übereinander angeordnete Magnetpole (z. B. 27a, 31a) jeweils ein Paar bilden und n eine an sich beliebige ganze Zahl bedeutet. Diese Magnetpolpaare 27a, 31a usw. entstehen durch die Anwendung von C-förmig ausgebildeten Kernen 32, deren Mittelschenkel parallel zur z-Achse angeordnet und von Wicklungen 33 umgeben sind, die beim Betrieb des Magnetschwebefahrzeugs 1 so von Gleichstrom durchflossen werden, dass sich z. B. an den oberen Schenkeln der Kerne 32 jeweils Nordpole N (27a ... 27n) und an den unteren Schenkeln der Kerne 32 jeweils Südpole S (31a ... 31n) ausbilden. Wie insbesondere in Fig. 5 durch Pfeile 34 angedeutet ist, sind der Wicklungssinn und die Stromrichtungen in Längs- bzw. Fahrtrichtung des Magnetschwebefahrzeugs 1 bei allen Kernen 32 identisch. Das hat zur Folge, dass die Führmagnetanordnungen 27 bis 29 (Fig. 2) im wesentlichen eine anziehende Magnetkraft (Pfeile F in Fig. 4) auf die ihnen gegenüberliegenden, aus ferromagnetischem Material bestehenden Reaktionsschienen 8 ausüben. Mit Hilfe von nicht dargestellten Spaltsensoren und Regelvorrichtungen wird beim Betrieb außerdem dafür gesorgt, dass die Ströme, die den Wicklungen 33 auf der rechten und linken Seite (Fig. 4) des Fahrwegträgers 2 zugeführt werden, eine resultierende Kraft F = Fₗᵢₙₖₛ - F_{rechts} erzeugen, die das Magnetschwebefahrzeug 1 relativ zum Fahrwegträger 2 bzw. zu den Reaktionsschienen 8 so zentriert, daß die Spalte 7a eine vorgewählte Größe nicht überschreiten. Dadurch, dass die Magnetpole 27a ... 27n, 31a ... 31n in Fahrtrichtung bis auf kleine, durch die Wicklungen 33 bedingte Lücken dicht nebeneinander angeordnet werden können und oben bzw. unten durchgehend dieselbe Polarität aufweisen
(Fig. 5), wird außerdem erreicht, dass in den Reaktionsschienen 8 nur kleine, den Fahrtwiderstand nur wenig erhöhende Wirbelströme erzeugt werden.

Die Magnetanordnungen 28 und 29 (Fig. 2) sind genau so ausgebildet, wie die anhand der Fig. 3 bis 5 beschriebene Magnetanordnung 27.

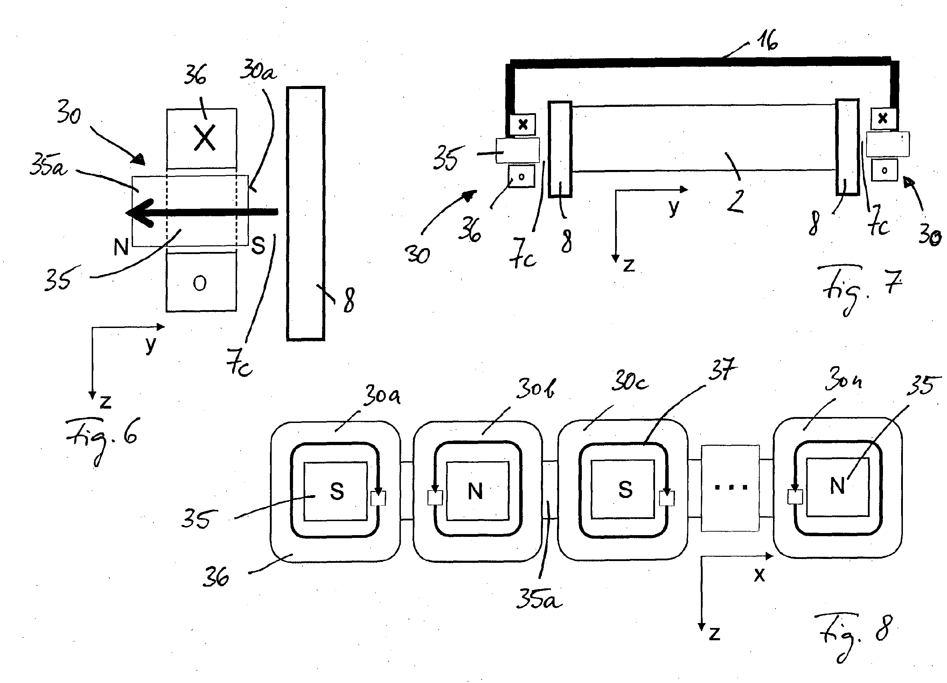

Demgegenüber zeigen Fig. 6 bis 8, dass die Bremsmagnetanordnungen 30 (Fig. 2) zwar ebenfalls eine Mehrzahl von in Fahrtrichtung nebeneinander liegenden Magnetpolen 30a, 30b ... 30n (Fig. 8) aufweisen, die wie die Magnetpole 27a ... 27n und 31a ... 31n der Führmagnetanordnungen 27 bis 29 an beiden Seiten des Schwebegestells 16 angeordnet sind und den Reaktionsschienen 8 unter Bildung je eines Spalts 7c (Fig. 7) gegenüberstehen. Die Magnetpole 30a ... 30n werden jedoch im Gegensatz zu den Führmagnetpolen z. B. durch stabförmige Kerne 35 gebildet, deren Achsen senkrecht zu den Reaktionsschienen 8 bzw. parallel zur y-Achse stehen. Die Kerne 35 sind außerdem von Wicklungen 36 mit entsprechend erstreckten Achsen umgeben und an ihren Rückseiten mit wenigstens einem Magnetrücken 35 verbunden. Beim normalen Betrieb sind diese Wicklungen 36 stromlos. Ist eine Notbremsung erforderlich oder eine Anwendung der Bremsmagnetanordnung 30 aus anderen Gründen erwünscht, dann werden den Wicklungen 36 Gleichströme derart zugeführt, dass z. B. ein Magnetpol 30a (Fig. 8) ein Südpol S, ein darauf folgender Magnetpol 30b ein Nordpol N, der nächste Magnetpol 30c wiederum ein Südpol S usw. ist, d. h. die in x-Richtung aufeinander folgenden Magnetpole 30a ... 30n abwechselnd Nord- oder Südpole sind. Die dazu erforderlichen Stromrichtungen sind in Fig. 8 schematisch durch Pfeile 37 angedeutet.

Aufgrund dieser alternierenden Anordnung von Nord- und Südpolen und der in x-Richtung erfolgenden Bewegung der Magnetpole 30a ... 30n relativ zu den aus massiven und elektrisch leitenden Materialien hergestellten Reaktionsschienen 8 entstehen, wenn den Wicklungen 36 Gleichstrom zugeführt wird, magnetische Wechselfelder, die in den Reaktionsschienen 8 elektrische Wechselfelder und damit Wirbelströme induzieren, die den Grund ihrer Entstehung, nämlich die Bewegung der Magnetpole 30a ... 30n, zu hemmen versuchen und das Magnetschwebefahrzeug 1 dadurch bremsen. Die Größe der Bremskraft ist durch die Stärke der den Wicklungen 36 zugeführten Ströme steuerbar.

Magnetschwebefahrzeug sowie Führ- und Bremsmagnetanordnungen der beschriebenen Art sind dem Fachmann aus den Druckschriften DE 10 2004 056 438 A1 und DE 10 2004 013 994 A1 bekannt, die hiermit der Einfachheit halber durch Referenz auf sie zum Gegenstand der vorliegenden Offenbarung gemacht werden.

Ein aus den Anordnungen nach Fig. 2 bis 8 resultierendes Problem besteht darin, dass sich eine ungleichförmige Krafteinleitung in das Schwebegestell 16 (Fig. 1) ergibt. Dadurch entstehen Giermomente, die vom Schwebegestell 16 und dem Wagenkasten 17 bzw. dem Fahrweg 2 (Fig. 1) aufgefangen werden müssen. Bei einem Magnetschwebefahrzeug 1 mit einem mittleren Bremsmagneten 30 und z. B. je drei davor bzw. dahinter angeordneten Führmagneten 27 bis 29 würden sich insgesamt vier Lastwechsel ergeben, und zwar an den beiden Enden des Magnetschwebefahrzeugs 2 je einer und im Bereich des Bremsmagneten 30 weitere zwei. Das ist insbesondere bei schnell fahrenden Magnetschwebefahrzeugen 1 wegen der dadurch auf den Fahrweg 2 ausgeübten Kräfte unerwünscht.

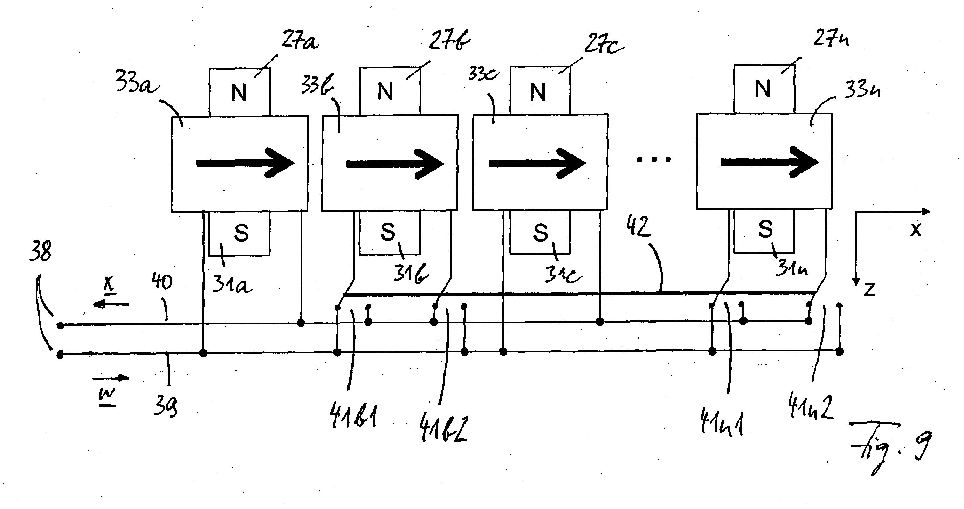

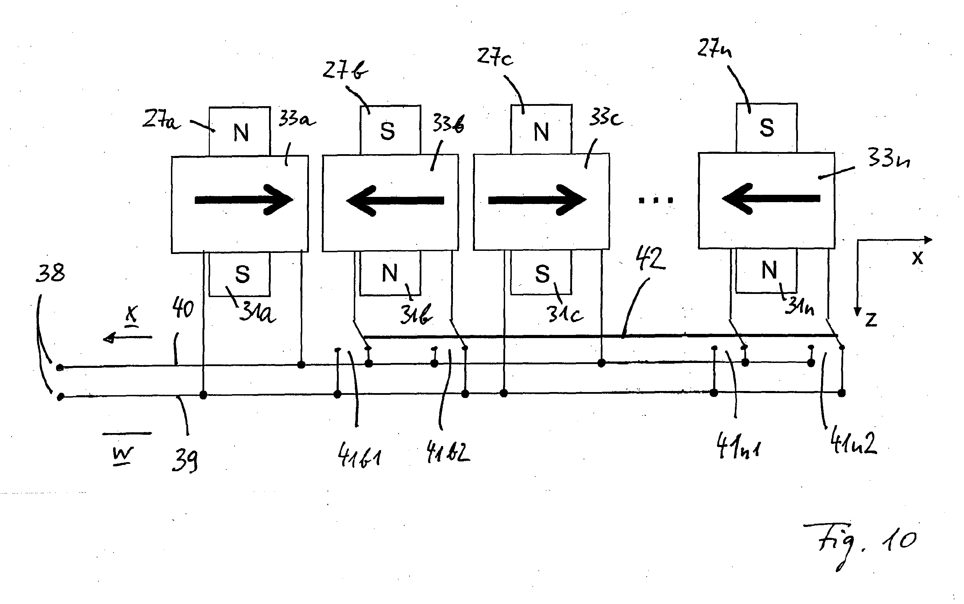

Fig. 9 und 10 zeigen schematisch eine erfindungsgemäße Magnetanordnung, bei der von der in Fig. 3 bis 5 dargestellten Magnetanordnung ausgegangen wird, wie ein Vergleich der Fig. 9 und 10 mit Fig. 5 zeigt. Gleiche Teile sind daher mit denselben Bezugszeichen wie in Fig. 3 bis 5 versehen.

Im Unterschied zu Fig. 3 bis 5 sind nicht alle Wicklungen 33 der einzelnen Magnetpole 27a ... 27n und 31a ... 31n, wobei der Buchstabe n hier eine ganze und vorzugsweise auch gerade Zahl bedeutet, direkt an zwei schematisch angedeutete Ausgänge 38 eines Regelkreises angeschlossen. Dies gilt vielmehr nur für jede zweite Wicklung 33a, 33c ... 33n - 1, die fest an je eine mit dem betreffenden Ausgang 38 des Reglers verbundene Leitung 39 bzw. 40 angeschlossen sind, wobei Pfeile w und x in Fig. 9 schematisch die Richtungen der in den Leitungen 39, 40 fließenden Gleichströme andeuten. Daraus folgt, gleicher Wicklungssinn vorausgesetzt, dass die Magnetpole 27a, 27c usw. einerseits und die Magnetpole 31a, 31c usw. andererseits sämtlich dieselbe Polarität haben (z. B. oben nur Nordpole N, unten nur Südpole S).

Dagegen sind die Ein- und Ausgänge der Wicklungen 33b, 33d ... 33n, wobei die nicht gezeigte Wicklung 33d eine gedachte, auf die Wicklung 33c folgende Wicklung ist, über bewegliche Kontakte von Schaltern 41b1, 41b2 ... 41n1, 41n2 mit den Leitungen 39, 40 verbindbar, wobei die beweglichen Kontakte aller Schalter 41 z. B. gemeinsam umgeschaltet werden können, wie durch einen Schieber 42 schematisch angedeutet ist. Dabei ist klar, dass die Schalter 41 in Fig. 9 und 10 nur zum besseren Verständnis als mechanisch betätigte Schalter dargestellt sind, tatsächlich aber vorzugsweise aus elektronischen Schaltern bestehen.

Bei den in Fig. 9 dargestellten Stellungen der Schalter 41 sind jeweils die Eingänge der Wicklungen 33b, 33d ... 33n mit der Leitung 39 und die Ausgänge der Wicklungen 33b ... 33n mit der Leitung 41 verbunden. Wenn wiederum überall derselbe Wicklungssinn vorausgesetzt wird, bilden sich daher bei den Magnetpolen 27b, 27d ... 27n, wobei der Magnetpol 27d ein gedachter, in der Zeichnung nicht dargestellter Magnetpol ist, der auf den Magnetpol 27c folgt, dieselben Polaritäten wie bei den Magnetpolen 27a, 27c ... 27n - 1 aus, wobei n als eine ganze gerade Zahl vorausgesetzt wird. In diesem Zustand entspricht die Magnetanordnung nach Fig. 9 genau der nach Fig. 5, d. h. alle Nordpole N liegen oben und alle Südpole S liegen unten, obwohl es natürlich auch umgekehrt sein könnte. Die Magnetanordnung nach Fig. 9 kann daher in Fig. 2 als Führmagnetanordnung 27, 28 und 29 verwendet werden.

Fig. 10 zeigt dieselbe Magnetanordnung, jedoch bei einer anderen Stellung der Schalter 41b1, 41b2 ... 41n1, 41n2. Die Schalter 41 sind jetzt durch Betätigung des schematisch dargestellten Schiebers 42 so eingestellt, dass die Eingänge der Wicklungen 33b, 33d ... 33n mit der Leitung 40 und die Ausgänge der Wicklungen 33b, 33d ... 33n mit der Leitung 39 verbunden sind. Das hat, da sich der Wicklungssinn nicht geändert hat, zur Folge, dass jetzt die oberen Magnetpole 27b, 27d ... 27n Südpole S und die entsprechenden unten liegenden Magnetpole 31b, ... 31n Nordpole N sind. Daher sind sowohl in der oberen als auch in der unteren Reihe der Magnetpole abwechselnd Nord- und Südpole vorhanden, wie das auch in Fig. 8 für nur eine Reihe von Magnetpolen dargestellt ist. Dadurch eignet sich die Magnetanordnung gemäß Fig. 10 jetzt in Fig. 2 als Bremsmagnetanordnung 30, da bei einer Bewegung der Magnetpole relativ zu den Reaktionsschienen 8 beide Reihen von Magnetpolen magnetische Wechselfelder bilden und in den Reaktionsschienen 8 bremsende Wirbelströme erzeugen können.

Dieselbe Magnetanordnung (Fig. 3 bis 5) ist somit erfindungsgemäß sowohl als Führmagnet (Fig. 9) als auch als Bremsmagnet (Fig. 10) anwendbar, je nach dem, ob die Schalter 41 die Stellungen nach Fig. 9 oder nach Fig. 10 einnehmen. Daher wird das erfindungsgemäße Magnetschwebefahrzeug vorzugsweise auf beiden Seiten des Fahrwegträgers 2 mit wenigstens je einer Magnetanordnung z. B. nach Fig. 3 bis 5 ausgerüstet, wobei diese beiden Magnetanordnungen zweckmäßig baugleich und spiegelsymmetrisch zu einer parallel zur Fahrtrichtung erstreckten Fahrzeug-Mittelebene 43 (Fig. 4) angeordnet sind. Die einzelnen Wicklungen 33 dieser Magnetanordnung werden dabei über Schaltungsanordnungen nach Fig. 9 und 10 an geeignete Stromquellen angeschlossen, um mittels der Schalter 41 wahlweise die Führ- und/oder die Bremsfunktion einzustellen.

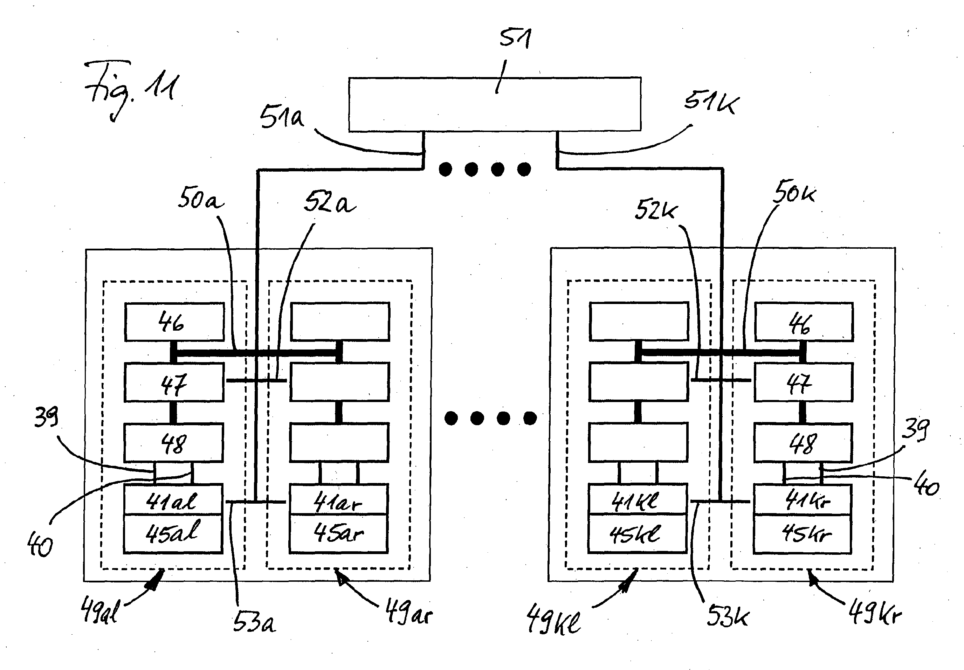

In Fig. 11 ist ein schematisches Blockschaltbild dargestellt, das die Steuerung der Magnetanordnungen nach Fig. 9 und 10 zeigt. Es ist hier angenommen, dass auf jeder Seite eines Fahrzeugs 1 oder einer Fahrzeugsektion (Fig. 2) gleichartige Magnetanordnungen 45al (l = links) und 45ar (r = rechts) bis 45kl und 45kr vorhanden sind, wobei k irgendeine ganze Zahl sein kann. Jede Magnetanordnung wird entsprechend Fig. 9 und 10 über die Leitungen 39 und 40 und die zugehörigen Schalter 41al, 41ar usw. mit Strom versorgt. Dieser Strom wird in bekannter Weise von Regelschaltungen geliefert, die Spaltsensoren 46 zur Messung der Führspalte 7a (Fig. 1) und mit diesen verbundene Regler 47 und Stromsteller 48 aufweisen, die zusammen mit den Schaltern 41 und Magnetanordnungen 45 je ein durch eine gestrichelte Linie umrandetes Magnetsystem 49al, 49ar usw. bilden. Leitungen 50a ... 50k deuten in Fig. 6 an, dass die Regelung in jedem Paar von zusammengehörigen Magnetsystemen 49al, 49ar bzw. 49kl, 49kr so erfolgt, dass sich auf beiden Fahrzeugseiten gleiche Führspalte 7a ergeben.

Im Normalfall befinden sich die Schalter 41 in den Stellungen nach Fig. 9, so dass die Regler 47 für die übliche Spaltregelung sorgen. Ist es dagegen *erforderlich,* einen Bremsvorgang einzuleiten, wird hierfür ein in Fig. 6 schematisch dargestellter Bremscontroller 51 aktiviert, der k Ausgänge 51a bis 51k aufweist, die mit je einem Paar der Magnetsysteme 49al, 49ar bis 49kl, 49kr verbunden sind. Mit Leitungen 52 und 53 ist außerdem angedeutet, dass der Bremscontroller 51 einerseits auf die Regler 47, andererseits auf die Schalter 41al, 41ar usw. einwirken kann.

Im Bremsfall sorgt der Bremscontroller 51 einerseits über die Leitung 53 dafür, dass die Schalter 41al, 41ar usw. in die Stellungen nach Fig. 10 umgeschaltet werden. Andererseits werden den Reglern 47 im Bremsfall Signale derart zugeführt, dass den beiden Magnetanordnungen eines Paars (z. B. den Magnetanordnungen 45al, 45ar) jeweils solche Ströme überlagert werden, wie es der Bremsfall erfordert. Diese Ströme sind vorzugsweise für beide Magnetanordnungen des Paars gleich groß, damit die für die Führfunktion erforderliche Differenz der beiden Ströme auf der linken und rechten Seite gleich groß bleibt.

Nach Beendigung des Bremsvorgangs wird der Bremscontroller 51 deaktiviert, so dass die Schalter 41 in die Stellungen nach Fig. 9 zurückkehren und die Magnetanordnungen 45al, 45ar usw. wieder wie vor Eintritt des Bremsmanövers arbeiten.

Die beschriebene Magnetanordnung bietet zahlreiche Vorteile. Zunächst können die den Wicklungen 33 im Falle der Führfunktion zugeführten Ströme andere Stromstärken als im Fall der Bremsfunktion aufweisen. Während für die Führfunktion vergleichsweise kleine Ströme ausreichen, werden für die Bremsfunktion in Abhängigkeit von der jeweiligen Fahrzeuggeschwindigkeit im Allgemeinen größere und auch unterschiedlich große Ströme benötigt. Weiterhin ermöglicht die Erfindung bei Bedarf eine Beibehaltung der Führfunktion auch im Bremsfall. Da es für die Führfunktion erforderlich ist, die Ströme z. B. auf der rechten und linken Fahrzeugseite derart zu wählen, dass das Fahrzeug permanent in der Spur gehalten wird, braucht im Bremsfall diesen Strömen rechts und links jeweils nur ein auf beiden Seiten gleich großer Bremsstrom überlagert werden, um ohne Änderung der Führfunktion auch die Bremsfunktion zu erhalten.

Ein besonderer Vorteil der beschriebenen Anordnung besteht ferner darin, dass die Reihenfolge der Magnetpole längs des gesamten Magnetschwebefahrzeugs 1 so gewählt werden kann, wie aus Fig. 9 und 10 ersichtlich ist, d. h. es müssen sich keine unterschiedlichen Magnetanordnungen abwechseln. Ist in diesem Fall nur die Führfunktion erforderlich, was dem Regelfall entspricht, werden auf der gesamten Fahrzeuglänge mit der Ausnahme der beiden Enden keine störenden Lastwechsel mehr erhalten, insbesondere wenn die Magnetpole 27a ... 27n, 31a ... 31n lückenlos bzw. möglichst lückenlos angeordnet werden. Weiterhin stehen mehr Magnetpole als bisher für die Bremsfunktion zur Verfügung, wie ein Vergleich der Fig. 2 und 10 zeigt. Vorteilhaft ist ferner, dass die Redundanz sowohl bei Einstellung der Führfunktion als auch bei Einstellung der Bremsfunktion größer als bisher ist, da für beide Funktionen mehr Magnetpole als bisher verwendet werden können. Ein weiterer Vorteil besteht schließlich darin, dass die Bremsfunktion mit einer wählbaren Anzahl von Magnetpolen eingestellt werden kann. Das ist beispielsweise dadurch möglich, dass die Schaltungsanordnung so ausgebildet wird, dass die Schalter 41 nicht mit demselben Schieber 42 bzw. gleichzeitig betätigt werden müssen, sondern einzeln oder gruppenweise umschaltbar sind. Auf diese Weise kann die Bremskraft mit Hilfe der Stromstärke und/oder mit Hilfe der Zahl der ausgewählten Magnetpole weitgehend beliebig an die im Einzelfall erforderlichen Bedingungen angepasst werden.

Die Erfindung ist nicht auf das beschriebene Ausführungsbeispiel beschränkt, das auf vielfache Weise abgewandelt werden kann. Das gilt insbesondere für die konstruktive Ausgestaltung der Magnetpole 27a ... 27n, 31a ... 31n. Denkbar wäre z. B. die Anwendung von Kernen 32 mit einer von der C-Form nach Fig. 3 abweichenden Form, beispielsweise einer E-Form. Auch die Schaltungsanordnung nach Fig. 9 und 10 kann anders ausgebildet sein, zumal dies im wesentlichen von der Zahl der vorhandenen Magnetpolreihen und den Möglichkeiten zur Auswahl der Bremsmagnetpole abhängig ist. Weiterhin ist klar, dass ein Magnetschwebefahrzeug 1 auf jeder Seite über mehrere, in Fahrtrichtung hintereinander angeordnete Magnetanordnungen nach Fig. 9 und 10 verfügen kann, deren Wicklungen einzeln oder gruppenweise an unterschiedliche Regler angeschlossen sind. Weiter sind Konstruktionen denkbar, bei denen die Reaktionsschienen 8 nicht an den Seiten, sondern in einem mittleren Teil des Fahrwegträgers 2 angeordnet sind, in welchem Fall auch eine einzige Reaktionsschiene ausreichen würde. Schließlich versteht sich, dass die verschiedenen Merkmale auch in anderen als den beschriebenen und dargestellten Kombinationen angewendet werden können.

## Patentansprüche

1. Magnetschwebefahrzeug mit wenigstens einer Magnetanordnung (27 bis 30), die in einer Fahrtrichtung (x) angeordneten Magnetpole (27a ... 27n) mit zugeordneter Wicklung (33) aufweist, und mit einer an die Wicklung (33) angeschlossenen Schaltungsanordnung zur Versorgung der Wicklung (33) mit Gleichstrom, **dadurch gekennzeichnet, dass** eine Mehrzahl von Magnetpolen mit Wicklungen (33) in Fahrtrichtung (x) hintereinander angeordnet ist und dass die Schaltungsanordnung mit den Wicklungen (33) verbundene Schalter (41) zur wahlweisen Einstellung der Magnetanordnung auf eine Führfunktion und/oder eine Bremsfunktion enthält, wobei bei der Einstellung auf die Führfunktion alle Magnetpole (27a ... 27n) in Fahrtrichtung (x) durchgehend mit derselben Polarität und bei der Einstellung auf die Bremsfunktion in Fahrtrichtung (x) teilweise mit entgegengesetzten Polaritäten versehen werden.

2. Magnetschwebefahrzeug nach Anspruch 1, **dadurch gekennzeichnet, dass** die Magnetpole (27a ... 27n) in Fahrtrichtung (x) lückenlos hintereinander angeordnet sind.

3. Magnetschwebefahrzeug nach Anspruch 1 oder 2, **dadurch gekennzeichnet, dass** die Magnetanordnung (27 bis 30) wenigstens zwei in Fahrtrichtung (x) übereinander und parallel zueinander angeordnete Reihen von Magnetpolen (27a ... 27n; 31a ... 31n) aufweist, wobei je zwei übereinander liegende Magnetpole (27a, 31a; 27b, 31b usw.) ein Paar bilden, und dass die beiden Magnetpole (27a, 31a; 27b, 31b usw.) eines jeden Paars mit entgegengesetzter Polarität betrieben werden.

4. Magnetschwebefahrzeug nach Anspruch 3, **dadurch gekennzeichnet, dass** bei der Einstellung auf die Führfunktion alle Magnetpole (27a ... 27n) in einer ersten der beiden Reihen durchgehend mit derselben Polarität (z. B. N), alle Magnetpole (31a ... 31n) in einer zweiten der beiden Reihen ebenfalls durchgehend mit derselben, im Vergleich zur ersten Reihe aber entgegengesetzten Polarität (z. B. S) betrieben werden.

5. Magnetschwebefahrzeug nach Anspruch 3 oder 4, **dadurch gekennzeichnet, dass** bei Einstellung der Bremsfunktion sowohl die Magnetpole (27a ... 27n) in einer ersten der beiden Reihen als auch die Magnetpole (31a ... 31n) in einer zweiten der beiden Reihen zumindest teilweise mit in Fahrtrichtung (x) jeweils abwechselnd entgegengesetzten Polaritäten (N bzw. S) betrieben werden.

6. Magnetschwebefahrzeug nach einem der Ansprüche 1 bis 5 mit auf zwei Fahrzeugseiten parallel angeordneten Magnetanordnungen (27 bis 30), **dadurch gekennzeichnet, dass** die beiden Magnetanordnungen baugleich und spiegelsymmetrisch zu einer parallel zur Fahrtrichtung (x) erstreckten Fahrzeug-Mittelebene (43) angeordnet sind.

7. Magnetschwebefahrzeug nach Anspruch 6, **dadurch gekennzeichnet, dass** bei der Einstellung der Bremsfunktion die Führfunktion beibehalten wird.

8. Magnetschwebefahrzeug nach einem der Ansprüche 1 bis 7, **dadurch gekennzeichnet, dass** bei der Einstellung der Bremsfunktion die Bremskraft mit Hilfe einer vorgewählten Anzahl der Magnetpole (27a ... 27n; 31a ... 31n) erfolgt.

9. Magnetschwebefahrzeug nach einem der Ansprüche 1 bis 8, **dadurch gekennzeichnet, dass** bei der Einstellung der Bremsfunktion die Bremskraft mit Hilfe des den Wicklungen (32) der Magnetpole (27a ... 27n; 31a ... 31n) zugeführten elektrischen Stroms erfolgt.

## Claims

1. A magnetic levitation vehicle with at least one magnet arrangement (27 to 30), which comprises magnetic poles (27a ... 27n) with associated winding (33) arranged in a driving direction (x), and with a circuit arrangement connected to the winding (33) for supplying the winding (33) with direct current, **characterised in that** a plurality of magnetic poles with windings (33) are arranged one behind the other in driving direction (x) and **in that** the circuit arrangement contains switches (41) connected to the windings (33) for selectively setting the magnet arrangement to a guidance function and/or a brake function, wherein when the guidance function is set, all magnetic poles (27a ... 27n) are provided throughout with the same polarity in driving direction (x) and when the brake function is set, all magnetic poles (27a ... 27n) are provided partially with opposing polarities in driving direction (x).

2. The magnetic levitation vehicle according to claim 1, **characterised in that** the magnetic poles (27a ... 27n) are arranged one behind the other without gaps in driving direction (x).

3. The magnetic levitation vehicle according to claim 1 or 2, **characterised in that** the magnet arrangement (27 to 30) comprises at least two rows of magnetic poles (27a ... 27n) ; 31a ... 31n) arranged one above the other and parallel to one another in driving direction (x), wherein respectively two superimposed magnetic poles (27a, 31a; 27b, 31b etc.) form a pair, and **in that** the two magnetic poles (27a, 31a; 27b, 31b etc.) of each pair are operated at opposite polarities.

4. The magnetic levitation vehicle according to claim 3, **characterised in that** when the guidance function is set, all magnetic poles (27a ... 27n) in a first of the two rows are operated throughout with the same polarity (e.g. N), and all magnetic poles (31a ... 31n) in a second of the two rows are also operated throughout at the same polarity but at the opposite polarity in comparison to the first row.

5. The magnetic levitation vehicle according to claim 3 or 4, **characterised in that** when the brake function is set, both the magnetic poles (27a ... 27n) in a first of the two rows and the magnetic poles (31a ... 31n) in a second of the two rows alternate in being operated, at least partially, at respectively opposite polarities (N or S) in driving direction (x).

6. The magnetic levitation vehicle according to one of claims 1 to 5 with magnet arrangements (27 to 30) arranged in parallel on two vehicle sides, **characterised in that** the two magnet arrangements are structurally identical and arranged mirror-symmetrically to the vehicle centre plane (43) extending in parallel to the driving direction (x).

7. The magnetic levitation vehicle according to claim 6, **characterised in that** the guidance function is maintained when the brake function is set.

8. The magnetic levitation vehicle according to one of claims 1 to 7, **characterised in that** when the brake function is set, the force of braking is effected with the aid of a preselected number of magnetic poles (27a ... 27n; 31a ... 31n) .

9. The magnetic levitation vehicle according to one of claims 1 to 8, **characterised in that** when the brake function is set, the force of braking is effected with the aid of the electric current supplied to the windings (32) of the magnetic poles (27a ... 27n; 31a ... 31n) .

## Revendications

1. Véhicule à sustentation magnétique avec au moins un ensemble magnétique (27 à 30), lequel présente des pôles magnétiques (27a... 27n) disposés dans un sens de circulation (x) avec un enroulement (33) associé, et avec un circuit raccordé à l'enroulement (33) pour l'alimentation de l'enroulement (33) avec du courant continu,
**caractérisé en ce qu'**une pluralité de pôles magnétiques avec des enroulements (33) sont disposés les uns derrière les autres dans le sens de circulation (x) et que le circuit comprend des commutateurs (41) en liaison avec les enroulements (33) pour le réglage au choix de l'ensemble magnétique à une fonction de conduite et/ou une fonction de freinage, dans lequel, lors du réglage à la fonction de conduite, tous les pôles magnétiques (27a ... 27n) dans le sens de circulation (x) sont dotés en continu de la même polarité et lors du réglage à la fonction de freinage dans le sens de circulation (x), sont dotés en partie de polarités opposées.

2. Véhicule à sustentation magnétique selon la revendication 1, **caractérisé en ce que** les pôles magnétiques (27a ... 27n) sont disposés sans vide les uns derrière les autres dans le sens de circulation (x) .

3. Véhicule à sustentation magnétique selon la revendication 1 ou 2, **caractérisé en ce que** l'ensemble magnétique (27 à 30) présente au moins deux rangées de pôles magnétiques (27a ... 27n ; 31a ... 31n) disposées dans le sens de circulation (x) l'une au-dessus de l'autre et parallèlement entre elles, dans lequel respectivement deux pôles magnétiques (27a, 31a ; 27b 31b etc.) situés l'un au-dessus de l'autre forment une paire, et que l'on exploite les deux pôles magnétiques (27a, 31a ; 27b 31b etc.) de chaque paire avec une polarité opposée.

4. Véhicule à sustentation magnétique selon la revendication 3, **caractérisé en ce que**, lors du réglage à la fonction de conduite, on exploite tous les pôles magnétiques (27a ... 27n) dans une première des deux rangées en continu avec la même polarité (par ex. N), tous les pôles magnétiques (31a ... 31n) dans une deuxième des deux rangées également en continu avec la même polarité, mais opposée (par ex. S) en comparaison avec la première rangée.

5. Véhicule à sustentation magnétique selon la revendication 3 ou 4, **caractérisé en ce que**, lors du réglage de la fonction de freinage, on exploite les pôles magnétiques (27a ... 27n) dans une première des deux rangées tout comme également les pôles magnétiques (31a ... 31n) dans une deuxième des deux rangées au moins en partie avec des polarités respectivement tour à tour opposées (N ou S) dans le sens de circulation (x).

6. Véhicule à sustentation magnétique selon l'une des revendications 1 à 5 avec des ensembles magnétiques (27 à 30) disposés parallèlement sur deux côtés du véhicule, **caractérisé en ce que** les deux ensembles magnétiques sont de construction identique et disposés en symétrie spéculaire à un plan médian de véhicule (43) étendu parallèlement au sens de circulation (x).

7. Véhicule à sustentation magnétique selon la revendication 6, **caractérisé en ce que**, lors du réglage de la fonction de freinage, la fonction de conduite est maintenue.

8. Véhicule à sustentation magnétique selon l'une des revendications 1 à 7, **caractérisé en ce que**, lors du réglage de la fonction de freinage, la force de freinage a lieu à l'aide d'un nombre présélectionné des pôles magnétiques (27a ... 27n ; 31a ... 31n) .

9. Véhicule à sustentation magnétique selon l'une des revendications 1 à 8, **caractérisé en ce que**, lors du réglage de la fonction de freinage, la force de freinage a lieu à l'aide du courant électrique amené aux enroulements (32) des pôles magnétiques (27a ... 27n ; 31a ... 31n) .
